# EUROPEAN PATENT APPLICATION

(11) **EP 4 568 097 A1**
(43) Date of publication of application: **11.06.2025**
(21) Application number: 23214191.1
(22) Date of filing: 05.12.2023
(51) Int. Cl.: H02M 7/483, H05B 7/144

(54) **POWER SUPPLY SYSTEM FOR ARC FURNACE AND ASSOCIATED ARC FURNACE AND METHOD**

(71) Applicant: GE Energy Power Conversion Technology Limited, Rugby, Warwickshire CV21 1BD (GB)
(72) Inventor: ZHOU, Zhi, NISKAYUNA, 12309-1027 (US); BASIC, Duro, 91140 VILLEBON SUR YVETTE (FR); PERMUY, Alfred, 91140 VILLEBON-SUR-YVETTE (FR); MANKEVICH, Steven, FINDLAY TOWNSHIP, 15126 (US)
(74) Representative: Casalonga

(57) **Abstract**

The power supply system (1) for arc furnace (2), the power supply system including:
- a power converter (9), and
- a polyphase transformer (10),
- first disconnecting means (13) connecting an input of the power converter to a primary circuit of the transformer (10), and
- second disconnecting means (14) connecting an output of the power converter to the primary circuit of the transformer (10).

The power supply system further comprises first isolation switch (15A) and a second isolation switch (15B), and a control circuit (11).

## Description

The present invention concerns arc furnaces, and more particularly a power supply system for arc furnaces, and an arc furnace facility comprising an arc furnace and such a power supply system.

Arc furnaces are highly nonlinear loads resulting in considerable reactions on the power supply system, in particular so-called flicker.

The document EP 2 329 684 discloses a power supply system to supply a polyphase arc furnace from a grid.

The power supply system comprises an indirect power converter and a polyphase transformer.

The indirect power converter supplies a primary circuit of the transformer. A secondary circuit of the transformer supplies electrodes of the arc furnace.

The indirect power converter is controlled to minimize reactions on the grid in order to supress the flicker and in order to comply with grid quality standards.

During the tuning of the power supply system or when the indirect power converter goes wrong, the power supply system may be stop, for example following reactions on the grid generated by the indirect power converter greater than acceptable reactions.

During these more or less log stops, the arc furnace does not melt scraps to produce molten steel.

Machines using molten steel, for example rolling mills, are forced to be stopped during stops of the arc furnace generated production losses.

Further, during normal operation of the arc furnace, when the back-to-back electric arc furnace (EAF) converter is in full operation providing (real) power to the EAF furnace while controlling the voltage and current at the EAF, currents delivered by the indirect power converter going through the transformer generates losses and complicates operation of the arc furnace.

It is therefore proposed to overcome wholly or partially the disadvantages related to arc furnace power supply systems known from the prior art.

In view of the foregoing the invention proposes a power supply system for arc furnace including:
- a power converter comprising an input intended to be connected to a polyphase supply grid and an output, and
- a polyphase transformer comprising a primary circuit and a secondary circuit,
- first disconnecting means, and
- second disconnecting means.

The power supply system further comprises a first isolation switch and a second isolation switch, the first disconnecting means connecting the input of the power converter to a first end of the first isolation switch, the second disconnecting means connecting the output of the power converter to the first end of the first isolation switch, the second end of the first isolation switch being intended to be connected to at least one electrode of the arc furnace, the second isolation switch connecting the first end of the first isolation switch to the primary circuit and the secondary circuit being connected to the second end of the first isolation switch, and a control circuit.

The control circuit is configured:
o to control the power converter to supply the electrode and to stabilize the current and the voltage delivered by the grid to reduce reactions in the grid when the first disconnecting means are open, the second disconnecting means are closed, the first isolation switch is open and the second isolation switch is closed or the first isolation switch is closed and the second isolation switch is open, and
o to control the power converter to stabilize the current and the voltage delivered by the grid to reduce reactions in the grid when the first disconnecting means are closed, the second disconnecting means are open, the first isolation switch is open and the second isolation switch is closed.

Advantageously, the power converter comprises an input device, a link circuit comprising a first bus and a second bus, and an output device, wherein:
- the input device comprises a plurality of input modules each input module being connected to the first bus and the second bus and being intended to be connected to a different phase of the supply grid to supply the link circuit with a continuous voltage from the said phase of the supply grid,
- the output device comprises a plurality of output modules, each output module being connected to the first bus and second bus and to the primary circuit to supply the transformer with an alternative voltage from the circuit link.

Preferably, each input module comprises:
- a leg including:
   o a first string comprising:
      ▪ a first set of input switches connected in series, a second set of input switches connected in series, a first connecting node, a second connecting node, and a third connecting node,
      ▪ the first set of input switches operatively coupling the first bus to the third connecting node, and the first connecting node being disposed between two input switches of the first set of input switches,
      ▪ the second set of input switches operatively coupling the second bus to the third connecting node, and the second connecting node being disposed between two input switches of the second set of input switches,
   o a second string comprising:
      ▪ a first set of input switching units in series, a second set of input switching units in series, and a fourth connecting node,
      ▪ the first set of input switching units operatively coupling the first connecting node to the fourth connecting node,
      ▪ the second set of input switching units operatively coupling the second connecting node to the fourth connecting node, and
      ▪ the fourth connecting node being intended to be connected to the phase of the supply grid,
the control circuit being configured to control the input switches, the input switching units, and the output modules, the third connecting nodes of the input modules being connected together.

Advantageously, each input module comprises:
- a leg including:
   o a first string comprising:
      ▪ a first input switch, a second input switch, a first connecting node, a second connecting node, a third connecting node, a first set of input switching units connected in series, and a second set of input switching units connected in series,
      ▪ the first input switch operatively coupling the first bus to the first connecting node, and the first set of input switching units operatively coupling the first connecting node to the third connecting node,
      ▪ the second input switch operatively coupling the second bus to the second connecting node, and the second set of input switching units operatively coupling the second connecting node to the third connecting node,
   o a second string comprising:
      ▪ a third input switch, a fourth input switch, and a fourth connecting node,
      ▪ the third input switch operatively coupling the first connecting node to the fourth connecting node, and the fourth input switch operatively coupling the second connecting node to the fourth connecting node,
      ▪ the fourth connecting node being intended to be connected to the said phase of the supply grid,
the control circuit being configured to control the input switches, the input switching units, and the output modules, the third connecting nodes of the input modules being connected together.

Preferably, each input module comprises:
- a leg including:
   o a first string comprising:
      ▪ a first input switch, a second input switch, a first connecting node, a second connecting node, a third connecting node, a first set of input switching units connected in series, and a second set of input switching units connected in series,
      ▪ the first set of input switching units operatively coupling the first bus to the first connecting node, and the first input switch operatively coupling the first connecting node to the third connecting node,
      ▪ the second set of input switching units operatively coupling the second bus to the second connecting node, and the second input switch operatively coupling the second connecting node to the third connecting node,
   o a second string comprising:
      ▪ a third input switch, a fourth input switch, and a fourth connecting node,
      ▪ the third input switch operatively coupling the first connecting node to the fourth connecting node, and the fourth input switch operatively coupling the second connecting node to the fourth connecting node,
      ▪ the fourth connecting node being intended to be connected to the said phase of the supply grid,
the control circuit being configured to control the input switches, the input switching units, and the output modules, the third connecting nodes of the input modules being connected together.

Advantageously, each input module comprises a string comprising:
- a connecting node being intended to be connected to the said phase of the supply grid, a first set of input switching units connected in series, and a second set of input switching units connected in series,
- the first set of input switching units operatively coupling the first bus to the connecting node, and the second set of input switching units operatively coupling the second bus to the connecting node, and
the control circuit being configured to control the input switching units, and the output modules.

Preferably, each output module comprises:
- a leg including:
   o a first string comprising:
      ▪ a first set of output switches connected in series, a second set of output switches connected in series, a first connecting node, a second connecting node, and a third connecting node,
      ▪ the first set of output switches operatively coupling the first bus to the third connecting node, and the first connecting node being disposed between two output switches of the first set of output switches,
      ▪ the second set of output switches operatively coupling the second bus to the third connecting node, and the second connecting node being disposed between two output switches of the second set of output switches,
   o a second string comprising:
      ▪ a first set of output switching units in series, a second set of output switching units in series, and a fourth connecting node,
      ▪ the first set of output switching units operatively coupling the first connecting node to the third connecting node,
      ▪ the second set of output switching units operatively coupling the second connecting node to the fourth connecting node, and
      ▪ the fourth connecting node being intended to be connected to a phase of the arc furnace,
the control circuit being configured to control the output switches, the output switching units, and the output modules, the third connecting nodes of the output modules being connected together.

Advantageously, each output module comprises:
- a leg including:
   o a first string comprising:
      ▪ a first output switch, a second output switch, a first connecting node, a second connecting node, a third connecting node, a first set of output switching units connected in series, and a second set of output switching units connected in series,
      ▪ the first output switch operatively coupling the first bus to the first connecting node, and the first set of output switching units operatively coupling the first connecting node to the third connecting node,
      ▪ the second output switch operatively coupling the second bus to the second connecting node, and the second set of output switching units operatively coupling the second connecting node to the third connecting node,
   o a second string comprising:
      ▪ a third output switch, a fourth output switch, and a fourth connecting node,
      ▪ the third output switch operatively coupling the first connecting node to the fourth connecting node, and the fourth output switch operatively coupling the second connecting node to the fourth connecting node,
      ▪ the fourth connecting node being intended to be connected to a phase of the arc furnace,
the control circuit being configured to control the output switches, the output switching units, and the output modules, the third connecting nodes of the output modules being connected together.

Preferably, each output module comprises:
- a leg including:
   o a first string comprising:
      ▪ a first output switch, a second output switch, a first connecting node, a second connecting node, a third connecting node, a first set of output switching units connected in series, and a second set of output switching units connected in series,
      ▪ the first set of output switching units operatively coupling the first bus to the first connecting node, and the first output switch operatively coupling the first connecting node to the third connecting node,
      ▪ the second set of output switching units operatively coupling the second bus to the second connecting node, and the second output switch operatively coupling the second connecting node to the third connecting node,
   o a second string comprising:
      ▪ a third output switch, a fourth output switch, and a fourth connecting node,
      ▪ the third output switch operatively coupling the first connecting node to the fourth connecting node, and the fourth output switch operatively coupling the second connecting node to the fourth connecting node,
      ▪ the fourth connecting node being intended to be connected to a phase of the arc furnace,
the control circuit being configured to control the output switches, the output switching units, and the output modules, the third connecting nodes of the output modules being connected together.

Advantageously, each output module comprises a string comprising:
- a connecting node being intended to be connected to a phase of the arc furnace, a first set of output switching units connected in series, and a second set of output switching units connected in series,
- the first set of output switching units operatively coupling the first bus to the connecting node, and the second set of output switching units operatively coupling the second bus to the connecting node,
the control circuit being configured to control the output switching units and the output modules.

Preferably, the power supply system further comprises a third isolation switch, the third isolation switch connecting the secondary circuit to the second end of the first isolation switch, the control circuit being configured:
o to control the power converter to supply the electrode and to stabilize the current and the voltage delivered by the grid to reduce reactions in the grid when the first disconnecting means are open, the second disconnecting means are closed, the first isolation switch is open and the second and third isolation switches are closed or the first isolation switch is closed and the second and third isolation switches are open, and
o to control the power converter to stabilize the current and the voltage delivered by the grid to reduce reactions in the grid when the first disconnecting means are closed, the second disconnecting means are open, the first isolation switch is open and the second and third isolation switches are closed.

Another object of the invention relates to an arc furnace facility.

The arc furnace facility comprises an arc furnace including at least one electrode and a power supply system as defined above, wherein the electrode is connected to at least one phase of the secondary circuit of the polyphase transformer.

Advantageously, the arc furnace comprises a plurality of electrodes, each electrode being connected to a different phase of the secondary circuit.

Preferably, the power supply system further comprises a rectifier connected to the electrode and to each phase of the secondary circuit to supply the electrode with a continuous voltage from the secondary circuit.

Another object of the invention relates to a method for controlling a power supply system of an arc furnace, the power supply system including:
- a power converter comprising an input connected to a polyphase supply grid and an output, and
- a polyphase transformer comprising a primary circuit and a secondary circuit,
- first disconnecting means, and
- second disconnecting means.

The method comprises:
o controlling the power converter to supply the electrode and to stabilize the current and the voltage delivered by the grid to reduce reactions in the grid when the first disconnecting means are open, the second disconnecting means are closed, a first isolation switch is open and a second isolation switch is closed or the first isolation switch is closed and the second isolation switch is open, and
o controlling the power converter to stabilize the current and the voltage delivered by the grid to reduce reactions in the grid when the first disconnecting means are closed, the second disconnecting means are open, the first isolation switch is open and the second isolation switch is closed,
   - the first disconnecting means connecting the input of the power converter to a first end of the first isolation switch, the second disconnecting means connecting the output of the power converter to the first end of the first isolation switch, the second end of the first isolation switch being intended to be connected to at least one electrode of the arc furnace, the second isolation switch connecting the first end of the first isolation switch to the primary circuit and the secondary circuit being connected to the second end of the first isolation switch.

Other characteristics and advantages of the invention will emerge on reading the following description of embodiments of the invention, provided solely by way of non-limiting examples and with reference to the drawings in which:
Figure 1 illustrates schematically a first example of an arc furnace facility according to the invention,
Figure 2 illustrates schematically an example of a power converter according to the invention,
Figure 3 illustrates schematically a first example of an input module according to the invention,
Figure 4 illustrates schematically a second example of the input module according to the invention,
Figure 5 illustrates schematically a third example of the input module according to the invention,
Figure 6 illustrates schematically a fourth example of the input module known from the prior art,
Figure 7 illustrates schematically a first example of an output module according to the invention,
Figure 8 illustrates schematically a second example of the output module according to the invention,
Figure 9 illustrates schematically a third example of the output module according to the invention,
Figure 10 illustrates schematically a fourth example of the output module known from the prior art,
Figure 11 illustrates schematically a first embodiment of input switches and output switches according to the invention,
Figure 12 illustrates schematically a second embodiment of the input switches and the output switches according to the invention,
Figure 13 illustrates schematically a third embodiment of the input switches and the output switches according to the invention,
Figure 14 illustrates schematically a first embodiment of input switching units and output switching units according to the invention,
Figure 15 illustrates schematically a second embodiment of the input switching units and the output switching units according to the invention, and
Figure 16 illustrates a second example of the arc furnace facility according to the invention.

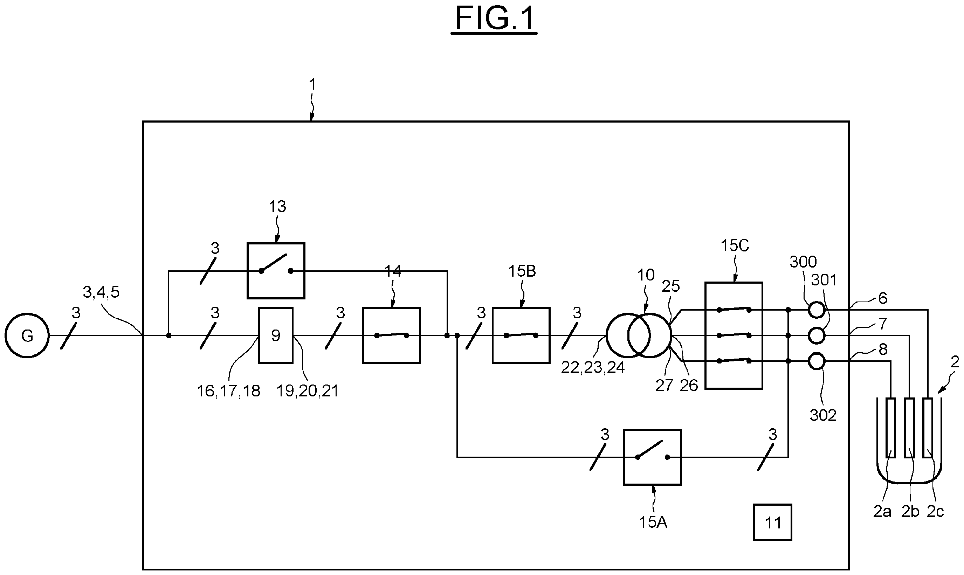

Figure 1 illustrates a first example of an arc furnace facility.

The arc furnace facility comprises a polyphase power supply system 1 connected to a grid G and an arc furnace 2 connected to the power supply system 1.

The power supply system 1 supplies the arc furnace 2 from electrical energy supplied by the grid G.

It is assumed that the power supply system 1 and the polyphase arc furnace 2 have each three phases, the grid G being a three phases supply grid.

Each of the power supply system 1 and the polyphase arc furnace 2 may have two phases or more than three phases, the grid G having the same number of phases as the power supply system 1.

The arc furnace 2 comprises a set of electrodes comprising three electrodes 2a, 2b, 2c.

The electrodes 2a, 2b, 2c supplied by the power supply system 1 generate electric arcs between the electrodes 2a, 2b, 2c to melt the contents of the arc furnace 2, for example scrap steel.

The power supply system 1 comprises three inputs 3, 4, 5, each input being connected to a different phase of the grid G, and three outputs 6, 7, 8.

Each output 6, 7, 8 is connected to an electrode 2a, 2b, 2c.

The power supply system 1 further comprises a power converter 9, a transformer 10, a control circuit 11, current sensors, and voltage sensors.

The control circuit 11 may comprise a processing unit.

The power supply system 1 further comprises a first disconnecting means 13 and a second disconnecting means 14.

Each disconnecting means of the first and second disconnecting means 13 and 14 comprises for example a disconnector.

The power supply system 1 comprises a first isolation switch 15A, a second isolation switch 15B and a third isolation switch 15C.

The first, second disconnecting means 13, 14, and the first, second and third isolation switches 15A, 15B, 15C are controlled by the control circuit 11.

The power converter 9 comprises three inputs 16, 17, 18 and three outputs 19, 20, 21.

Each input 16, 17, 18 of the power converter 9 is connected to a different input 3, 4, 5 of the power supply system 1.

The transformer 10 further comprises a primary circuit including three phases 22, 23, 24 and a secondary circuit including three phases 25, 26, 27.

Each phase 25, 26, 27 of the secondary circuit is connected to a different output 6, 7, 8 of the power supply system 1.

Each phase 25, 26, 27 of the secondary circuit comprises a sensing module 300, 301, 302 comprising a voltage sensor and a current sensor measuring a voltage and a current of the said phase.

The first disconnecting means 13 connects the inputs 16, 17, 18 of the power converter 9 to a first end of the first isolation switch 15A.

The second disconnecting means 14 connects the outputs 19, 20, 21 of the power converter 9 to the first end of the first isolation switch 15A.

The second isolation switch 15B connects the first end of the first isolation switch 15A to the phases 22, 23, 24 of the primary circuit and the third isolation switch 15C connects the second end of the first isolation switch 15A to the phases 25, 26, 27 of the secondary circuit.

The first, second and third isolation switch 15A, 15B, 15C are interlocked so that when the first isolation switch 15A is open, the second and third isolation switches 15B, 15C are closed, and when the first isolation switch 15A is closed, the second and third isolation switches 15B, 15C are open. The first isolation switch 15A is normally open whereas the second and third isolation switches are normally closed.

In a variant, the power supply system 1 does not comprise the third isolation switch 15C, the second end of the first isolation switch 15A being connected to the phases 25, 26, 27 of the secondary circuit.

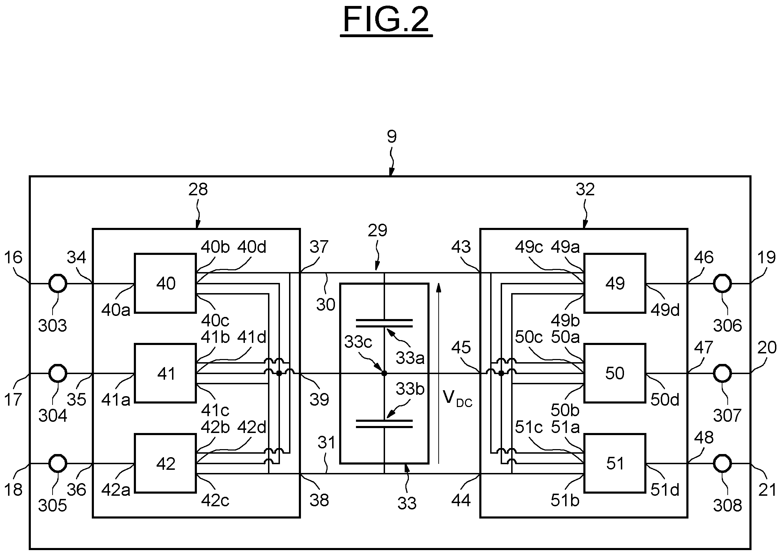

Figure 2 illustrates an example of the power converter 9.

The power converter 9 further comprises an input device 28, a link circuit 29 comprising a first bus 30 and a second bus 31, and an output device 32.

Each input 16, 17, 18 of the power converter 9 comprises a sensing module 303, 304, 305 comprising a voltage sensor and a current sensor measuring a voltage and a current of the said input.

Each output 19, 20, 21 of the power converter 9 comprises a sensing module 306, 307, 308 comprising a voltage sensor and a current sensor measuring a voltage and a current of the said output.

The first bus 30 may have a potential higher than the second bus 31.

The voltage between the first and second buses 30, 31 is noted VDC.

The link circuit 29 may further comprise a direct current DC link module 33 including two energy storage devices 33a, 33b connected in series.

A first end of a first energy storage device 33a is connected to the first bus 30, a first end of the second energy storage 33b is connected to the second bus 31, and the second end of the second energy storage 33b and the second end of the first energy storage 33a are connected to a connecting node 33c.

Each energy storage device 33a, 33b comprises for example a capacitor.

The input device 28 comprises three inputs 34, 35, 36 and three outputs 37, 38, 39.

Each input 34, 35, 36 of the input device 28 is connected to a different input 16, 17, 18 of the power converter 9.

A first output 37 of the input device 28 is connected to the first bus 30, a second output 38 of the input device 28 is connected to the second bus 31 and the third output 39 is connected to the connecting node 33c of the DC link module 33.

The input device 28 further comprises identical input modules 40, 41, 42 intended to the supply the link circuit 29 with a continuous voltage from the phases of the supply grid.

Each input module 40, 41, 42 is connected to a different input 34, 35, 36 of the input device 28.

Each input module 40, 41, 42 comprises an input 40a, 41a, 42a connected to the input 34, 35, 36 of the input device 28, a first output 40b, 41b, 42b connected to the first output 37 of the input device 28, a second output 40c, 41c, 42c connected to the second output 38 of the input device 28, and a third output 40d, 41d, 42d connected to the third output 39 of the input device 28.

The output device 32 comprises three inputs 43, 44, 45 and three outputs 46, 47, 48.

A first input 43 of the output device 32 is connected to the first bus 30, a second input 44 of the output device 32 is connected to the second bus 31, and the third input 45 of the output device 32 is connected to the connecting node 33c of the DC link module 33.

A first output 46 of the output device 32 is connected to a first output 19 of the power converter 9, a second output 47 is connected to a second output 20 of the power converter 9, and a third output 48 is connected to the third output 21 of the power converter 9.

The output device 32 further comprises identical output modules 49, 50, 51 intended to supply the transformer 10 with alternative voltages from the link circuit 29.

Each output module 49, 50, 51 comprises a first input 49a, 50a, 51a connected to the first input 43 of the output device 32, a second input 49b, 50b, 51b connected to the second input 44 of the output device 32 and a third input 49c, 50c, 51c connected to the third input 45 of the output device 32.

Each output module 49, 50, 51 further comprises an output 49d, 50d, 51d connected to a different output 46, 47, 48 of the output device 32.

The input device 28 is intended to supply the link circuit 29 with a continuous voltage from the grid G.

The output device 32 is intended to supply with electrical energy the electrodes 2a, 2b, 2c through the transformer 10.

The energy storage devices 33a, 33b are designed to stabilize the continuous voltage and to smooth the current variation on the buses 30, 31.

The DC link module 33 may decouple the input device 28 and the output device 32 to avoid that electrical perturbations generated by the arc furnace 2 are rejected on the grid G.

In a variant, the link circuit 29 may not comprise the DC link module 33, the third output 39 of the input device 28 and the third input 45 of the output device 32 being not connected.

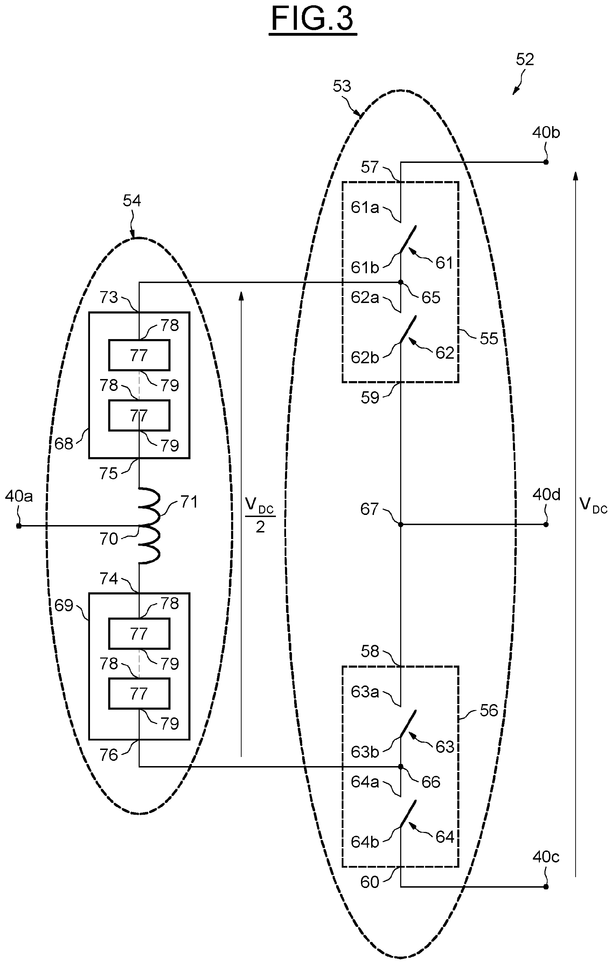

As the input modules 40, 41, 42 are identical, Figure 3 illustrates schematically a first example of the input module 40 comprising a first example of a hybrid modular multilevel converter HMMC.

The first example of HMMC comprises a leg 52 comprising a first string 53 and a second string 54.

The first string 53 comprises a first branch 55 and a second branch 56.

Each branch 55, 56 comprises a first end 57, 58 and a second end 59, 60.

The first end 57 of the first branch 55 is connected to the first output 40b of the input module 40 and the second end 60 of the second branch 56 is connected to the second output 40c of the input module 40.

Each branch 55, 56 comprises a first set of input switches 61, 62, 63, 64 connected in series between the first and the second ends 57, 58, 59, 60 of the said branch 55, 56.

The first branch 55 further comprises a first connecting node 65 situated between two input switches 61, 62 of the first set of input switches.

The second branch 56 further comprises a second connecting node 66 situated between two input switches 63, 64 of the second set of input switches.

As represented, the number of input switches between the first connecting node 65 and the first end 57 of the said branch may equal to the number of input switches between the first connecting node 65 and the second end 59, and the number of input switches between the second connecting node 66 and the first end 58 of the said branch may equal to the number of input switches between the second connecting node 66 and the second end 60.

Each branch 55, 56 may comprise more than two input switches, the two branches comprising a same number of input switches.

Each input switch 61, 62, 63, 64 comprises a first end 61a, 62a, 63a, 64a and a second end 61b, 62b, 63b, 64b.

The input switches 61, 62 of the first branch 55 are connected in series so that the first end 61a of the input switch 61 is connected to the first end 57 of the first branch 55, the second end 61b and the first end 62a of the input switches 61, 62 are connected to the first connecting node 65, and the second end 62b of the input switch 62 is connected to the second end 59 of the first branch 55.

The input switches 63, 64 of the second branch 56 are connected in series so that the first end 63a of the input switch 63 is connected to the first end 58 of the second branch 56, the second end 63b and the first end 64a of the input switches 63, 64 are connected to the second connecting node 66, and the second end 64b of the input switch 64 is connected to the second end 60 of the second branch 56.

The first string 53 further comprises a third connecting node 67 connected to the second end 59 of the branch 55, the first end 58 of the second branch 56, and the third output 40d of the input module 40.

The first set of input switches 61, 62 operatively couple the first bus 30 to the third connecting node 67, and the second set of input switches 63, 64 operatively couple the second bus 31 to the third connecting node 67.

The second string 54 comprises a first portion 68, a second portion 69, and a fourth connecting node 70.

The second string 54 may further comprise an inductor 71.

Each portion 68, 69 comprises a first end 73, 74, a second end 75, 76.

The first portion 68 comprises a first set of input switching units 77 in series between the first and second ends 73, 75 of the said portion.

The second portion 69 comprises a second set of input switching units 77 in series between the first and second ends 74, 76 of the said portion.

Each set of input switching units 77 comprises a same number of input switching units 77.

Each input switching unit 77 includes a plurality of controllable switches and energy storage means, the controllable switches being intended to bridge the energy storage means or to connect the energy storage means in each input switching unit 77.

The input switching units 77 of each set are connected in series so that the first connection 78 of an input switching unit 77 is connected to a second connection 79 of an adjacent input switching unit 77.

The first remaining connection 78 of the switching unit 77 of the first set is connected to the first end 73 and the second remaining connection 79 of the input switching unit 77 of the first set is connected to the second end 75.

The first remaining connection of an input switching unit 77 is the first connection 78 of the said input switching unit which is not connected to the first connection 78 or to the second connection 79 of another input switching unit 77.

The second remaining connection 79 of an input switching unit 77 is the second connection 79 of the said input switching unit which is not connected to the first connection 78 or to the second connection 79 of another input switching unit 77.

The first end 73 of the first portion 68 is connected to the first connecting node 65 and the second end 75 is connected to a first end of the inductor 71.

The first remaining connection 78 of the input switching unit 77 of the second set is connected to the first end 74 and the second remaining connection 79 of the input switching unit 77 of the second set is connected to the second end 76.

The first set of input switching units 77 operatively couples the first connecting node 66 to the fourth connecting node 70 and the second set of input switching units 77 operatively couples the second connecting node 66 to the fourth connecting node 70.

The first end 74 of the second portion 69 is connected to a second end of the inductor 71 and the second end 76 is connected to the second connecting node 66.

The fourth connecting node 70 connects the input 40a of the input module 40 to a mid-connecting node of the inductor 71.

The inductor 71 permits to limit current peaks in the second string 54 and the phases of the grid G during commutations of the input switching units 77.

In a variant, the second string 54 does not comprise the inductor 71, the ends 74, 75 of the first and second portions 68, 69 and the input 40a of the input module 40 being connected to the fourth connecting node 70, the first portion 68 or the second portion 69 comprising an inductor to limit the current peaks in the second string 54 and the second string 54 comprises another inductor connecting the input 40a of the input module 40 to the fourth connecting node 70 to limit the current peaks in the phase of the grid G.

In another variant, the second string 54 does not comprise the inductor 71, the ends 74, 75 of the first and second portions 68, 69 and the input 40a of the input module 40 are connected to the fourth connecting node 70, each of the first portion 68 and the second portion 69 comprising an inductor to limit the current peaks in the second string 54 and the second string 54 may comprise another inductor connecting the input 40a of the input module 40 to the fourth connecting node 70 to limit the current peaks in the phase of the grid G.

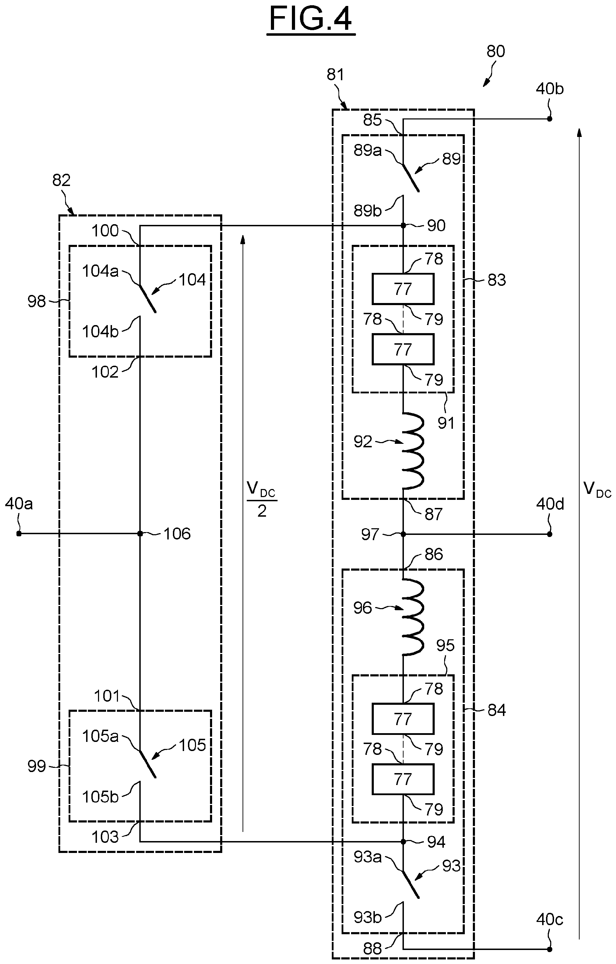

Figure 4 illustrates schematically a second example of the input module 40 comprising a second example of the HMMC.

The second example of HMMC comprises a leg 80 comprising a first string 81 and a second string 82.

The first string 81 comprises a first branch 83 and a second branch 84.

Each branch 83, 84 comprises a first end 85, 86 and a second end 87, 88.

The first end 85 of the first branch 83 is connected to the first output 40b of the input module 40 and the second end 88 of the second branch 84 is connected to the second output 40c of the input module 40.

The first branch 83 comprises a first input switch 89, a first connecting node 90, a first set 91 of input switching units 77 connected in series, and a first inductor 92.

A first end 89a of the first input switch 89 is connected to the first end 85 of the first branch 83 and a second end 89b of the first input switch 89 is connected to the first connecting node 90.

The input switching units 77 of the first set 91 are connected in series so that the first connection 78 of an input switching unit 77 is connected to a second connection 79 of an adjacent input switching unit 77.

The first remaining connection 78 of the input switching unit 77 of the first set 91 is connected to the first connecting node 90 and the second remaining connection 79 of the input switching unit 77 of the first set 91 is connected to a first end of the first inductor 92.

The second end of the first inductor 92 is connected to the second end 87 of the first branch 83.

The second branch 84 comprises a second input switch 93, a second connecting node 94, a second set 95 of input switching units 77 connected in series, and a second inductor 96.

A second end 93b of the second input switch 93 is connected to the second end 88 of the second branch 84 and a first end 93a of the second input switch 93 is connected to the second connecting node 94.

The input switching units 77 of the second set 95 are connected in series so that the first connection 78 of an input switching unit 77 is connected to a second connection 79 of an adjacent input switching unit 77.

The second remaining connection 79 of the input switching unit 77 of the second set 95 is connected to the second connecting node 94 and the first remaining connection 78 of the input switching unit 77 of the second set 95 is connected to a first end of the second inductor 96.

The second end of the second inductor 96 is connected to the first end 86 of the second branch 84.

The first and second sets 91, 95 of input switching units 77 have a same number of input switching units 77.

The first string 81 further comprises third connecting node 97 connected to the first end 86 of the second branch 84, the second end of the first branch 83, and the third input 40d of the input module 40.

The first input switch 89 connects the first bus 30 to the first connecting node 90 and the input switching units 77 connects in series of the first set 91 of input switching units 77.

The input switching units 77 connected in series of the first set 91 of input switching units 77 connected in series with the first inductor 92 connect the first connecting node 90 to the third connecting node 97.

The second input switch 93 connects the second bus 31 to the second connecting node 94 and the second set 95 of input switching units 77.

The input switching units 77 connected in series of the second set 95 of input switching units 77 connected in series with the second inductor 96 connect the second connecting node 94 to the third connecting node 97.

Each branch 83, 84 may comprise more than one input switch, the input switches being connected in series between a connecting node and one end of the said branch.

The first and second inductors 92, 96 limit current peaks in the first string 81 and the phases of the grid G during commutations of the input switching units 77.

The second string 82 comprises a first portion 98 and a second portion 99.

Each portion 98, 99 comprises a first end 100, 101 and a second end 102, 103.

The first portion 98 comprises a third input switch 104 comprising a first end 104a connected to the first end 100 of the said portion and a second end 104b connected to the second end 102 of the said portion.

The second portion 99 comprises a fourth input switch 105 comprising a first end 105a connected to the first end 101 of the said portion and a second end 105b connected to the second end 103 of the said portion.

In a variant, each portion 98, 99 may comprise more than one input switch connected in series between both ends of the said portion, the number of input switches of the first and second portions being identical.

The second string 82 further comprises a fourth connecting node 106 connected to the second end 102 of the first portion 98, the first end 101 of the second portion 99, and the input 40a of the input module 40.

The first end 100 of the first portion 98 is connected to the first connecting node 90 and the second end 103 of the second portion 99 is connected to the second connecting node 94.

The third input switch 104 operatively couples the first connecting node 90 to the fourth connecting node 106 and the fourth input switch 105 operatively couples the second connecting node 94 to the fourth connecting node 106.

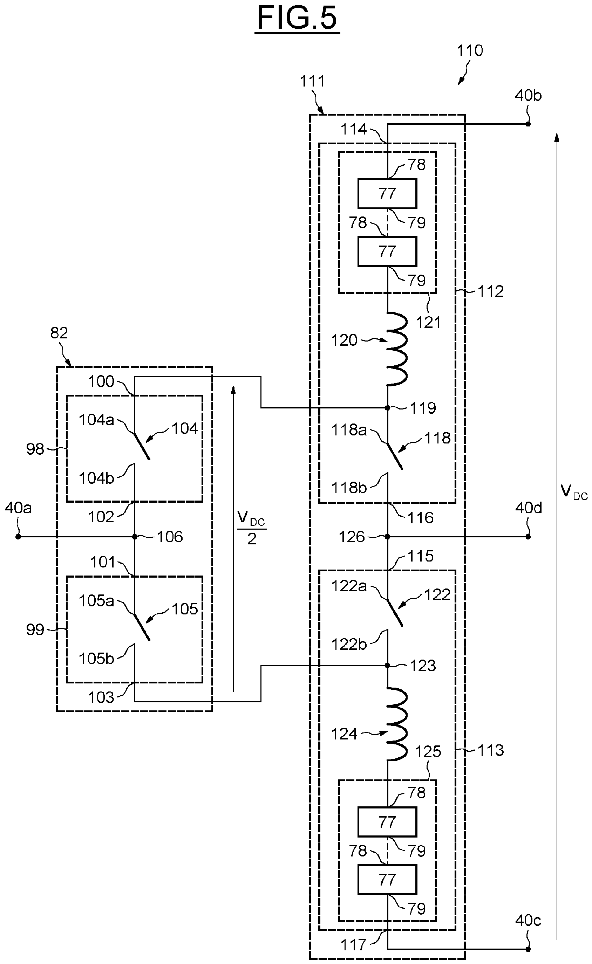

Figure 5 illustrates schematically a third example of the input module 40 comprising a third example of the HMMC.

The third example of HMMC comprises a leg 110 comprising a first string 111 and the second string 82 according to the second example of HMMC illustrated in figure 4.

The first string 111 comprises a first branch 112 and a second branch 113.

Each branch 112, 113 comprises a first end 114, 115 and a second end 116, 117.

The first end 114 of the first branch 112 is connected to the first output 40b of the input module 40 and the second end 117 of the second branch 113 is connected to the second output 40c of the input module 40.

The first branch 112 comprises a first input switch 118, a first connecting node 119, a first inductor 120, and a first set 121 of input switching units 77 connected in series.

A second end 118b of the first input switch 118 is connected to the second end 116 of the first branch 112 and a first end 118a of the first input switch 118 is connected to the first connecting node 119.

The input switching units 77 of the first set 121 are connected in series so that the first connection 78 of an input switching unit 77 is connected to a second connection 79 of an adjacent input switching unit 77.

The first remaining connection 78 of the input switching unit 77 of the first set 121 is connected to the first end 114 of the first branch 112 and the second remaining connection 79 of the input switching unit 77 of the first set 121 is connected to a first end of the first inductor 120.

The second end of the first inductor 120 is connected to the first connecting node 119.

The second branch 113 comprises a second input switch 122, a second connecting node 123, a second inductor 124, and a second set 125 of input switching units 77 connected in series.

A first end 122a of the second input switch 122 is connected to the first end 115 of the second branch 113 and a second end 122b of the second input switch 122 is connected to the second connecting node 123.

The input switching units 77 of the second set 125 are connected in series so that the first connection 78 of an input switching unit 77 is connected to a second connection 79 of an adjacent input switching unit 77.

The first remaining connection 78 of the input switching unit 77 of the second set 125 is connected to a first end of the second inductor 124.

A second end of the second inductor 124 is connected to the second connecting node 123.

The second remaining connection 79 of the input switching unit 77 of the second set 125 is connected to the second end 117 of the second branch 113.

The first and second sets 121, 125 of input switching units 77 have a same number of input switching units 77.

The first string 111 further comprises third connecting node 126 connected to the first end 115 of the second branch 113, the second end 116 of the first branch 112, and the third input 40d of the input module 40.

The first set 121 of input switching units 77 operatively couples the first bus 30 to the first connecting node 119 and the first input switch 118 operatively coupling the first connecting node 119 to the third connecting node 126.

The second set 125 of input switching units 77 operatively couples the second bus 31 to the second connecting node 123 and the second input switch 122 operatively couples the second connecting node 123 to the third connecting node 126.

Each branch 112, 113 may comprise more than one input switch, the input switches being connected in series between a connecting node and one end of the said branch.

The first and second inductors 120, 124 limit current peaks in the first string 111 and the phases of the grid G during commutations of the input switching units 77.

The first end 100 of the first portion 98 of the second string 82 is connected to the first connecting node 119 and the second end 103 of the second portion 99 of the second string 82 is connected to the second connecting node 123.

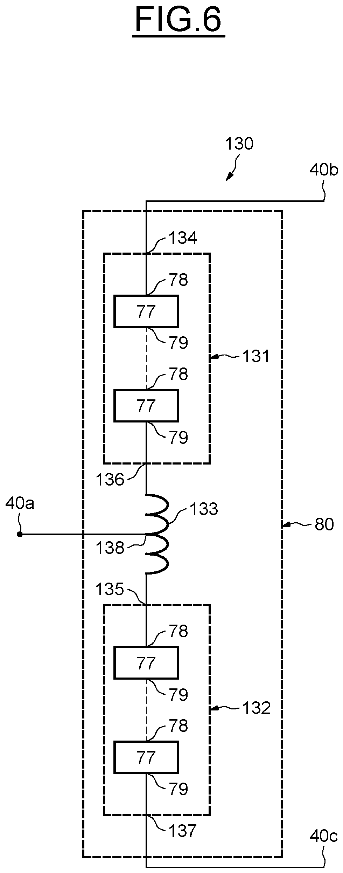

Figure 6 illustrates schematically a fourth example of the input module 40 comprising an example of a modular multi-level converter MMC.

The output module 40 comprises a string 130 including a first portion 131 and a second portion 132.

The input module 40 comprises an inductor 133.

Each portion 131, 132 comprises a first end 134, 135 and a second end 136, 137.

The first end 134 of the first portion 131 is connected to the first output 40b of the input module 40 and the second end 137 of the second portion 132 is connected to the second output 40c of the input module 40.

The third output 40d of the input module 40 is not connected.

The first portion 131 comprises a first set of input switching units 77 in series between the first and second ends 134, 136 of the said portion.

The second portion 132 comprises a second set of input switching units 77 in series between the first and second ends 135, 137 of the said portion.

Each set of input switching units 77 comprises a same number of switching units 77.

The input switching units 77 of each set are connected in series so that the first connection 78 of an input switching unit 77 is connected to a second connection 79 of an adjacent input switching unit 77.

The first remaining connection 78 of the input switching unit 77 of the first set is connected to the first end 134 and the second remaining connection 79 of the input switching unit 77 of the first set is connected to the second end 136.

The first remaining connection 78 of the input switching unit 77 of the second set is connected to the first end 135 and the second remaining connection 79 of the input switching unit 77 of the second set is connected to the second end 137.

The string 130 further comprises a connecting node 138.

The second end 136 of the first portion 131 is connected to a first end of the inductor 133 and the first end 135 of the second portion 132 is connected to the second end of the inductor 133.

The connecting node 138 connects the input 40a of the input module 40 to a mid-connecting node of the inductor 133.

The first set of input switching units 77 operatively couples the first bus 30 to the connecting node 138 and the second set of input switching units 77 operatively couples the second bus 31 to the connecting node 138.

The inductor 133 permits to limit current peaks in the string 130 and the phases of the grid G during commutations of the input switching units 77.

In a variant, the string 130 does not comprise the inductor 133, the ends 136, 135 of the first and second portions 131, 132 and the input 40a of the input module 40 being connected to the connecting node 138, the first portion 131 or the second portion 132 comprising an inductor to limit the current peaks in the string 130 and the string 130 comprises another inductor connecting the input 40a of the input module 40 to the connecting node 130 to limit the current peaks in the phase of the grid G.

In another variant, the string 130 does not comprise the inductor 133, the ends 136, 135 of the first and second portions 131, 132 and the input 40a of the input module 40 are connected to the connecting node 138, each of the first portion 131 and the second portion 132 comprising an inductor to limit the current peaks in the string 130 and the string 130 may comprise another inductor connecting the input 40a of the input module 40 to the connecting node 138 to limit the current peaks in the phase of the grid G.

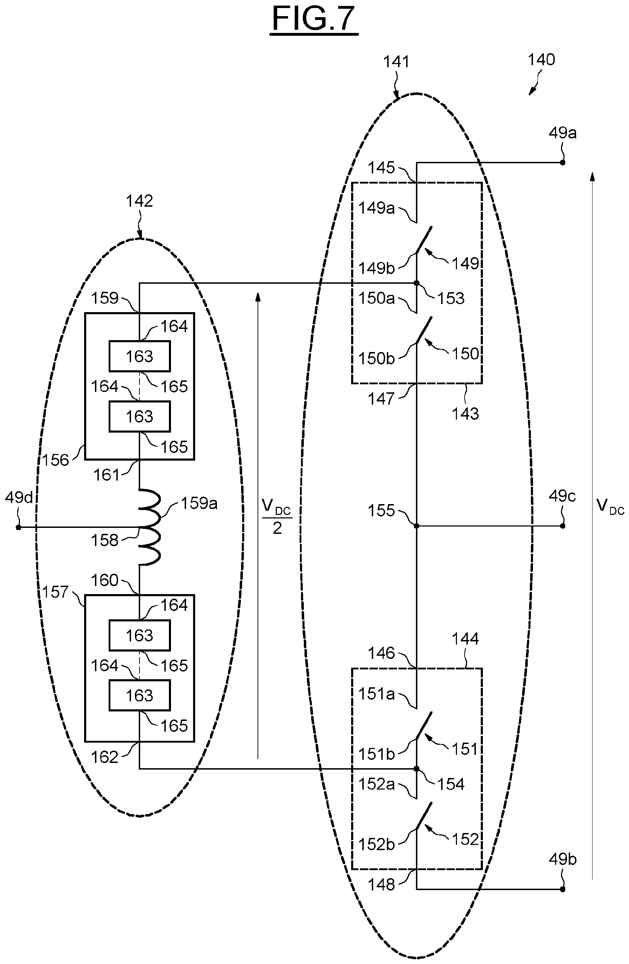

As the output modules 49, 50, 51 are identical, figure 7 illustrates schematically a first example of the output module 49 comprising a first example of the HMMC.

The first example of the output module 49 comprises a leg 140 comprising a first string 141 and a second string 142.

The first string 141 comprises a first branch 143 and a second branch 144.

Each branch 143, 144 comprises a first end 145, 146 and a second end 147, 148.

The first end 145 of the first branch 143 is connected to the first input 49a of the output module 49 and the second end 148 of the second branch 144 is connected to the second input 49b of the output module 49.

Each branch 143, 144 comprises a first set of output switches 149, 150, 151, 152 connected in series between the first and the second ends 145, 146, 147, 148 of the said branches 143, 144.

The first branch 143 further comprises a first connecting node 153 situated between two output switches 149, 150 of the first set of output switches so that the number of output switches between the first connecting node 153 and the first end 145 of the said branch is equal to the number of output switches between the first connecting node 153 and the second end 147.

The second branch 144 further comprises a second connecting node 154 situated between two output switches 151, 152 of the second set of output switches so that the number of output switches between the second connecting node 154 and the first end 146 of the said branch is equal to the number of output switches between the second connecting node 154 and the second end 148.

Each branch 143, 144 may comprise more than two output switches, the two branches comprising a same number of output switches.

Each output switch 149, 150, 151, 152 comprises a first end 149a, 150a, 151a, 152a and a second end 149b, 150b, 151b, 152b.

The output switches 149, 150 of the first branch 143 are connected in series so that the first end 150a of the output switch 150 is connected to the first end 145 of the first branch 143, the second end 149b and the first end 150a of the output switches 149, 150 are connected to the first connecting node 153, and the second end 150b of the switch 150 is connected to the second end 147 of the first branch 143.

The output switches 151, 152 of the second branch 144 are connected in series so that the first end 151a of the output switch 151 is connected to the first end 146 of the second branch 144, the second end 151b and the first end 152a of the output switches 151, 152 are connected to the second connecting node 154, and the second end 152b of the output switch 152 is connected to the second end 148 of the second branch 144.

The first string 141 further comprises a third connecting node 155 connected to the second end 147 of the first branch 143, the first end 146 of the second branch 144, and the third input 49c of the output module 49.

The first set of output switches 149, 150 operatively couple the first bus 30 to the third connecting node 155, and the second set of output switches 151, 152 operatively couple the second bus 31 to the third connecting node 155.

The second string 142 comprises a first portion 156, a second portion 157, and a fourth connecting node 158.

The second string 142 may further comprise an inductor 159a.

Each portion 156, 157 comprises a first end 159, 160, a second end 161, 162.

The first portion 156 comprises a first set of output switching units 163 in series between the first and second ends 159, 161 of the said portion.

The second portion 157 comprises a second set of output switching units 163 in series between the first and second ends 160, 162 of the said portion.

Each set of output switching units 163 comprises a same number of output switching units 163.

Each output switching unit 163 includes a plurality of controllable switches and energy storage means, the controllable switches being intended to bridge the energy storage means or to connect the energy storage means in each output switching unit 163.

The output switching units 163 of each set are connected in series so that the first connection 164 of an output switching unit 163 is connected to a second connection 165 of an adjacent output switching unit 163.

The first remaining connection of the output switching unit 163 of the first set is connected to the first end 159 and the second remaining connection 165 of the output switching unit 163 of the first set is connected to the second end 161.

The first end 159 of the first portion 156 is connected to the first connecting node 153 and the second end 161 is connected to a first end of the inductor 159a.

The first remaining connection of the output switching unit 163 of the second set is connected to the first end 160 and the second remaining connection of the output switching unit 163 of the second set is connected to the second end 162.

The first set of output switching units 163 operatively couples the first connecting node 153 to the fourth connecting node 158 and the second set of output switching units 163 operatively couples the second connecting node 154 to the fourth connecting node 158.

The first end 160 of the second portion 157 is connected to a second end of the inductor 159a and the second end 162 is connected to the second connecting node 154.

The fourth connecting node 158 connects the output 49d of the output module 49 to a mid-connecting node of the inductor 159a.

The inductor 159a permits to limit current peaks in the second string 142 and the phases of the arc furnace 2 during commutations of the output switching units 163.

In a variant, the second string 142 does not comprise the inductor 159a, the ends 161, 160 of the first and second portions 156, 157 and the output 49d of the output module 49 being connected to the fourth connecting node 158, the first portion 156 or the second portion 157 comprising an inductor to limit the current peaks in the second string 142 and the second string 142 comprises another inductor connecting the output 49d of the output module 49 to the fourth connecting node 159 to limit the current peaks in the phase of the arc furnace 2.

In another variant, the second string 142 does not comprise the inductor 159a, the ends 161, 160 of the first and second portions 156, 157 and the output 49d of the output module 49 are connected to the fourth connecting node 158, each of the first portion 156 and the second portion 157 comprising an inductor to limit the current peaks in the second string 142 and the second string 142 may comprise another inductor connecting the output 49d of the output module 49 to the fourth connecting node 158 to limit the current peaks in the phase of the arc furnace 2.

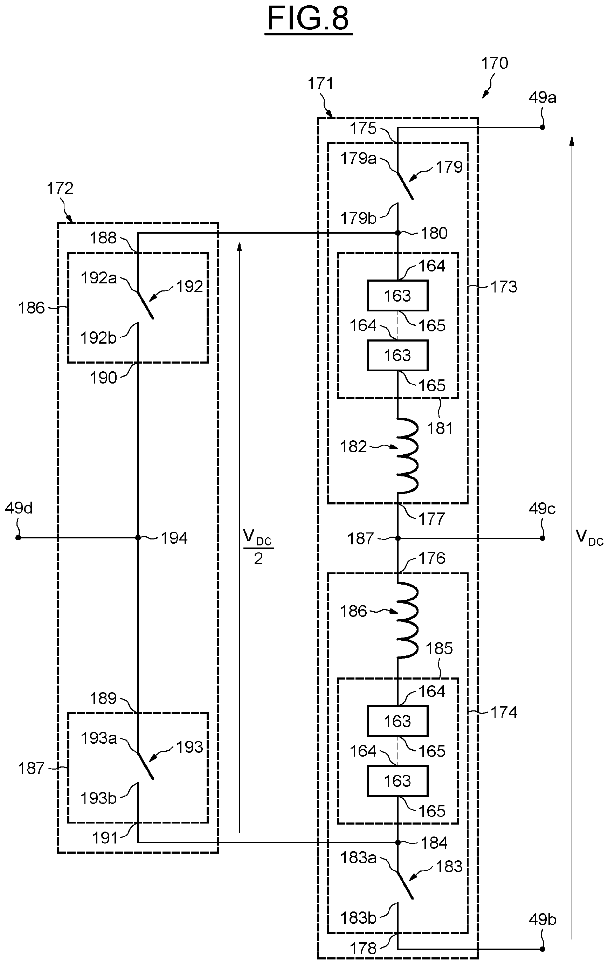

Figure 8 illustrates schematically a second example of the output module 49 comprising a second example of the hybrid modular multilevel converter HMMC.

The second example of the output module 49 comprises a leg 170 comprising a first string 171 and a second string 172.

The first string 171 comprises a first branch 173 and a second branch 174.

Each branch 173, 174 comprises a first end 175, 176 and a second end 177, 178.

The first end 175 of the first branch 173 is connected to the first input 49a of the output module 49 and the second end 178 of the second branch 174 is connected to the second input 49b of the output module 49.

The first branch 173 comprises a first output switch 179, a first connecting node 180, a first set 181 of output switching units 163 connected in series, and a first inductor 182.

A first end 179a of the first output switch 179 is connected to the first end 175 of the first branch 173 and a second end 179b of the first output switch 179 is connected to the first connecting node 180.

The output switching units 163 of the first set 181 are connected in series so that the first connection 164 of an output switching unit 163 is connected to a second connection 165 of an adjacent output switching unit 163.

The first remaining connection of the output switching unit 163 of the first set 181 is connected to the first connecting node 180 and the second remaining connection of the output switching unit 163 of the first set 181 is connected to a first end of the first inductor 182.

The second end of the first inductor 182 is connected to the second end 177 of the first branch 173.

The second branch 174 comprises a second output switch 183, a second connecting node 184, a second set 185 of output switching units 163 connected in series, and a second inductor 186.

A second end 183b of the second output switch 183 is connected to the second end 178 of the second branch 174 and a first end 183a of the second output switch 183 is connected to the second connecting node 184.

The output switching units 163 of the second set 185 are connected in series so that the first connection 164 of an output switching unit 163 is connected to a second connection 165 of an adjacent output switching unit 163.

The second remaining connection 165 of the output switching unit 163 of the second set 185 is connected to the second connecting node 184 and the first remaining connection 164 of the output switching unit 163 of the second set 185 is connected to a first end of the second inductor 186.

The second end of the second inductor 186 is connected to the first end 176 of the second branch 174.

The first and second sets 181, 185 of output switching units 163 have a same number of output switching units 163.

The first string 171 further comprises a third connecting node 187 connected to the first end 176 of the second branch 174, the second end 177 of the first branch 173 and the third input 49c the output module 49.

The first output switch 179 is operatively coupling the first bus 30 to the first connecting node 180 and the first set 181 of output switching units 163 is operatively coupling the first connecting node 180 to the third connecting node 187.

The second output switch 183 is operatively coupling the second bus 31 to the second connecting node 184 and the second set 185 of output switching units 163 is operatively coupling the second connecting node 184 to the third connecting node 187.

Each branch 173, 174 may comprise more than one output switch, the output switches being connected in series between a connecting node and one end of the said branch.

The first and second inductors 182, 186 limit current peaks in the first string 171 and the phases of the arc furnace 2 during commutations of the output switching units 163.

The second string 172 comprises a first portion 186 and a second portion 187.

Each portion 186, 187 comprises a first end 188, 189 and a second end 190, 191.

The first portion 186 comprises a third output switch 192 comprising a first end 192a connected to the first end 188 of the said portion and a second end 192b connected to the second end 190 of the said portion.

The second portion 187 comprises a fourth output switch 193 comprising a first end 193a connected to the first end 189 of the said portion and a second end 193b connected to the second end 191 of the said portion.

In a variant, each portion 186, 187 may comprise more than one output switch connected in series between both ends of the said portion, the number of output switches of the first and second portions being identical.

The second string 172 further comprises a fourth connecting node 194 connected to the second end 190 of the first portion 186, the first end 189 of the second portion 187, and the output 49d of the output module 49.

The first end 188 of the first portion 186 is connected to the first connecting node 180 and the second end 191 of the second portion 187 is connected to the second connecting node 184.

The third output switch 192 operatively couples the first connecting node 180 to the fourth connecting node 194 and the fourth output switch 193 operatively couples the second connecting node 184 to the fourth connecting node 194.

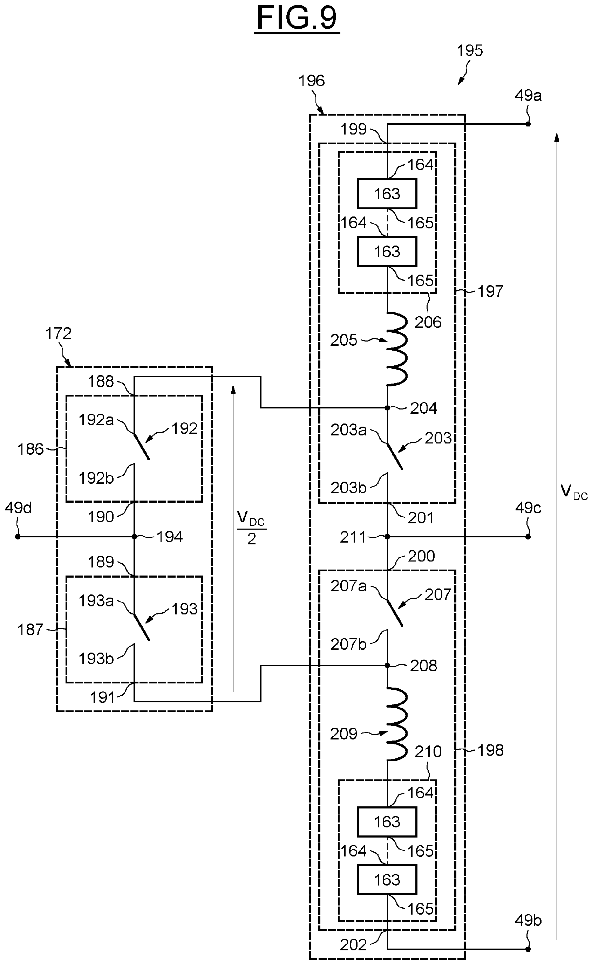

Figure 9 illustrates schematically a third example of the output module 49 comprising a third example of the hybrid modular multilevel converter HMMC.

The third example of the output module 49 comprises a leg 195 comprising a first string 196 and the second string 172 according to the second example of the hybrid modular multilevel converter illustrated in figure 8.

The first string 196 comprises a first branch 197 and a second branch 198.

Each branch 197, 198 comprises a first end 199, 200 and a second end 201, 202.

The first end 199 of the first branch 197 is connected to the first input 49a of the output module 49 and the second end 202 of the second branch 198 is connected to the second input 49b of the output module 49.

The first branch 197 comprises a first output switch 203, a first connecting node 204, a first inductor 205, and a first set 206 of output switching units 163 connected in series.

A second end 203b of the first output switch 203 is connected to the second end 201 of the first branch 197 and a first end 203 of the first output switch 203 is connected to the first connecting node 204.

The output switching units 163 of the first set 206 are connected in series so that the first connection 164 of an output switching unit 163 is connected to a second connection 165 of an adjacent output switching unit 163.

The first remaining connection 164 of the output switching unit 163 of the first set 206 is connected to the first end 199 of the first branch 197 and the second remaining connection 165 of the output switching unit 163 of the first set 206 is connected to a first end of the first inductor 205.

The second end of the first inductor 205 is connected to the first connecting node 204.

The second branch 198 comprises a second output switch 207, a second connecting node 208, a second inductor 209, and a second set 210 of input switching units 163 connected in series.

A first end 207a of the second output switch 207 is connected to the first end 200 of the second branch 198 and a second end 207b of the second output switch 207 is connected to the second connecting node 208.

The output switching units 163 of the second set 210 are connected in series so that the first connection 164 of an output switching unit 163 is connected to a second connection 165 of an adjacent switching unit 163.

The first remaining connection 164 of the output switching unit of the second set 210 is connected to a first end of the second inductor 209.

A second end of the second inductor 209 is connected to the second connecting node 208.

The second remaining connection 165 of the output switching unit 163 of the second set 210 is connected to the second end 202 of the second branch 198.

The first and second sets 206, 210 of output switching units 163 have a same number of output switching units 163.

The first string 196 further comprises a third connecting node 211 connected to the first end 200 of the second branch 198, the second end 201 of the first branch 197 and the third input 49c of the output module 49.

The first set 206 of output switching units 163 operatively couples the first bus 30 to the first connecting node 204 and the first output switch 203 operatively coupling the first connecting node 204 to the third connecting node 211.

The second set 210 of output switching units 163 operatively couples the second bus 31 to the second connecting node 208 and the second input switch 207 operatively couples the second connecting node 208 to the third connecting node 211.

Each branch 197, 198 may comprise more than one output switch, the output switches being connected in series between a connecting node and one end of the said branch.

The first and second inductors 205, 209 limit current peaks in the first string 196 and the phases of the arc furnace 2 during commutations of the output switching units 163.

The first end 188 of the first portion 186 of the second string 172 is connected to the first connecting node 204 and the second end 191 of the second portion 187 of the second string 172 is connected to the second connecting node 208.

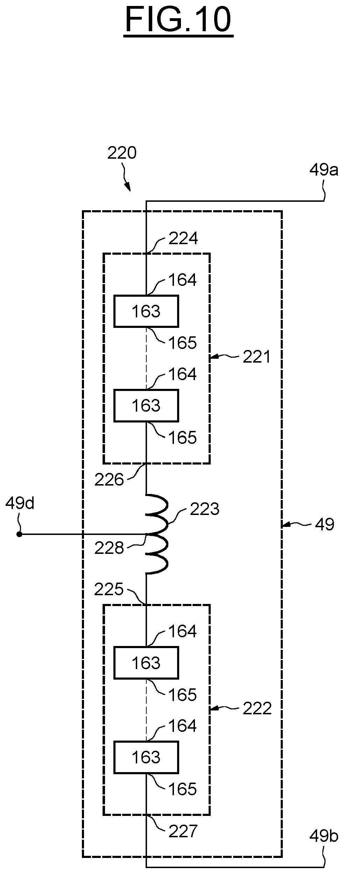

Figure 10 illustrates schematically a fourth example of the output module 49 comprising an example of a modular multi-level converter MMC.

The output module 49 comprises a string 220 including a first portion 221 and a second portion 222.

The output module 49 comprises an inductor 223.

Each portion 221, 222 comprises a first end 224, 225, a second end 226, 227.

The first end 224 of the first portion 221 is connected to the first input 49a of the output module 49 and the second end 227 of the second portion 222 is connected to the second input 49b of the output module 49.

The input 49c of the output module 49 is not connected.

The first portion 221 comprises a first set of output switching units 163 in series between the first and second ends 224, 226 of the said portion.

The second portion 222 comprises a second set of output switching units 163 in series between the first and second ends 225, 227 of the said portion.

Each set of output switching units 163 comprises a same number of output switching units 163.

The output switching units 163 of each set are connected in series so that the first connection 164 of an output switching unit 163 is connected to a second connection 165 of an adjacent output switching unit 163.

The first remaining connection 164 of the output switching unit 163 of the first set is connected to the first end 224 and the second remaining connection 165 of the output switching unit 163 of the first set is connected to the second end 226.

The first remaining connection 164 of the output switching unit 163 of the second set 222 is connected to the first end 225 and the second remaining connection 165 of the output switching unit 163 of the second set is connected to the second end 227.

The string 220 further comprises a connecting node 228.

The second end 226 of the first portion 221 is connected to a first end of the inductor 223 and the first end 225 of the second portion 222 is connected to the second end of the inductor 223.

The connecting node 228 connects the output 49d of the output module 49 to a mid-connecting node of the inductor 223.

The first set of output switching units 163 operatively couples the first bus 30 to the connecting node 228 and the second set of output switching units 163 operatively couples the second bus 31 to the connecting node 228.

The inductor 223 permits to limit current peaks in the string 220 and the phases of the grid G during commutations of the output switching units 163.

In a variant, the string 220 does not comprise the inductor 223, the ends 226, 225 of the first and second portions 221, 222 and the output 49d of the output module 49 being connected to the connecting node 228, the first portion 221 or the second portion 222 comprising an inductor to limit the current peaks in the string 220 and the string 220 comprises another inductor connecting the output 49d of the output module 49 to the connecting node 228 to limit the current peaks in the phase of the arc furnace 2.

In another variant, the string 220 does not comprise the inductor 223, the ends 226, 225 of the first and second portions 221, 222 and the output 49d of the output module 49 are connected to the connecting node 228, each of the first portion 221 and the second portion 222 comprising an inductor to limit the current peaks in the string 220 and the string 220 may comprise another inductor connecting the output 49d of the output module 49 to the connecting node 228 to limit the current peaks in the phase of the arc furnace 2.

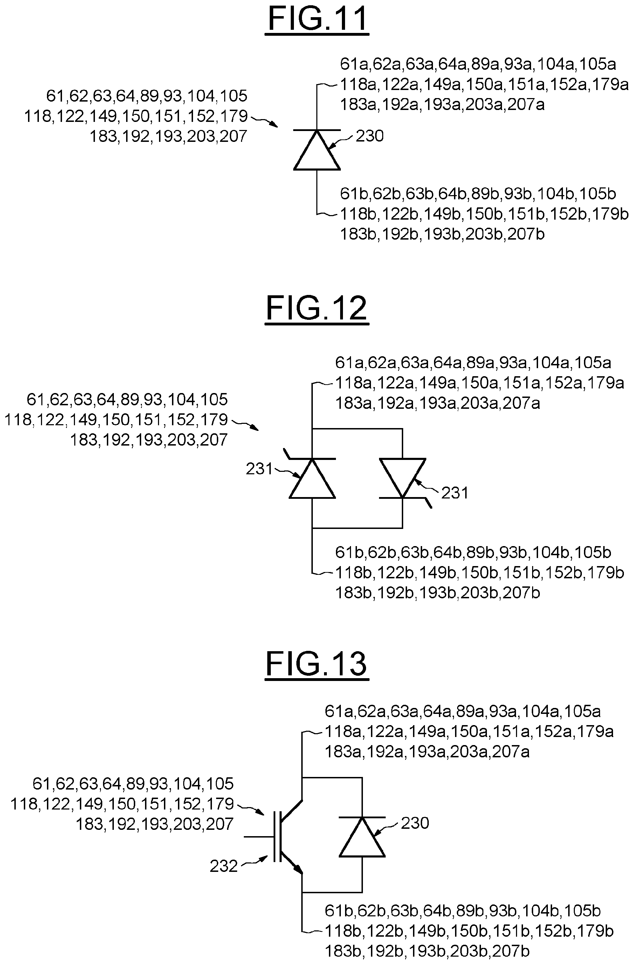

Figure 11 illustrates schematically a first embodiment of the input switches 61, 62, 63, 64, 89, 93, 104, 105, 118, 122 and the output switches 149, 150, 151, 152, 179, 183, 192, 193, 203, 207.

Each switch of the input and output switches comprises a diode 230 extending between the first and the second ends of the switch 61, 62, 63, 64, 89, 93, 104, 105, 118, 122, 149, 150, 151, 152, 179, 183, 192, 193, 203, 207 so that the anode of the diode 230 is connected to the second end 61b, 62b, 63b, 64b, 89b, 93b, 104b, 105b, 118b, 122b, 149b, 150b, 151b, 152b, 179b, 183b, 192b, 193b, 203b, 207b of the switch and the cathode is connected to the first end 61a, 62a, 63a, 64a, 89a, 93a, 104a, 105a, 118a, 122a, 149a, 150a, 151a, 152a, 179a, 183a, 192a, 193a, 203a, 207a of the switch.

As the diode 230 does need to be controlled by the control circuit 11, the first example of the switch comprising the diode 230 simplify the implementation of the input switches in the input modules 40, 41, 42 and in the implementation of the output switches in the output modules 49, 50, 51.

Each switch may comprise a plurality of diodes 230 in series so that the anode of one diode is connected to the cathode of another diode.

When the input switches according to the first embodiment of the said switches comprising the diode 230 are implemented in input modules comprising an HMMC as illustrated in figures 3 to 5 according to the first, second and third examples of the input modules or when the output switches according to the first embodiment of the said switches comprising the diode 230 are implemented in output modules comprising an HMMC as illustrated in figures 6 to 8 according to the first, second and third examples of the output modules, the diode 230 is designed to support a voltage at least equal to VDC/2.

Each input or output switch may comprise a plurality of diodes 230 in series so that the anode of one diode is connected to the cathode of another diode.

Figure 12 illustrates schematically a first embodiment of the input switches 61, 62, 63, 64, 89, 93, 104, 105, 118, 122 and the output switches 149, 150, 151, 152, 179, 183, 192, 193, 203, 207.

Each switch of the input and output switches comprises the diode 230 extending between the first and the second ends of the switch 61, 62, 63, 64, 89, 93, 104, 105, 118, 122, 149, 150, 151, 152, 179, 183, 192, 193, 203, 207 so that the anode of the diode 230 is connected to the second end 61b, 62b, 63b, 64b, 89b, 93b, 104b, 105b, 118b, 122b, 149b, 150b, 151b, 152b, 179b, 183b, 192b, 193b, 203b, 207b of the switch and the cathode is connected to the first end 61a, 62a, 63a, 64a, 89a, 93a, 104a, 105a, 118a, 122a, 149a, 150a, 151a, 152a, 179a, 183a, 192a, 193a, 203a, 207a of the switch.

Each switch further comprises a gate turn off thyristor 231.

The gate of the gate turn off thyristor 231 is connected to the control circuit 11, the anode of the gate turn off thyristor 231 is connected to the cathode of the diode 230, and the cathode of the gate turn off thyristor 231 is connected to the anode of the diode 230.

Each switch may comprise a plurality of gate of the gate turn off thyristors 231 in series so that the anode of one thyristor is connected to the cathode of another thyristor.

When the input switches according to the second embodiment of the said switches comprising the diode 230 and the gate turn off thyristor 230 are implemented in input modules comprising an HMMC as illustrated in figures 3 to 5 according to the first, second and third examples of the input modules or when the output switches according to the second embodiment of the said switches are implemented in output modules comprising an HMMC as illustrated in figures 6 to 8 according to the first, second and third examples of the output modules, the diode 230 and the gate turn off thyristors 231 are designed to support a voltage at least equal to VDC/2.

Each input or output switch may comprise a plurality of gate turn off thyristors 231 in parallel with the diode 230 in series so that the anode of one diode is connected to the cathode of another diode.

Figure 13 illustrates schematically a third embodiment of the input switches 61, 62, 63, 64, 89, 93, 104, 105, 118, 122 and the output switches 149, 150, 151, 152, 179, 183, 192, 193, 203, 207.

Each switch of the input and output switches comprises the diode 230 extending between the first and the second ends of the switch 61, 62, 63, 64, 89, 93, 104, 105, 118, 122, 149, 150, 151, 152, 179, 183, 192, 193, 203, 207 so that the anode of the diode 230 is connected to the second end 61b, 62b, 63b, 64b, 89b, 93b, 104b, 105b, 118b, 122b, 149b, 150b, 151b, 152b, 179b, 183b, 192b, 193b, 203b, 207b of the switch and the cathode is connected to the first end 61a, 62a, 63a, 64a, 89a, 93a, 104a, 105a, 118a, 122a, 149a, 150a, 151a, 152a, 179a, 183a, 192a, 193a, 203a, 207a of the switch.

Each switch further comprises a field effect transistor 232.

The field effect transistor 232 may be an insulated gate bipolar transistor for example using silicon-base semiconductors such as insulated gate bipolar transistor IGBT or injection-enhanced gate transistor IEGT, or using silicon carbide semiconductors such as metal-oxide-semiconductor field-effect transistor MOSFET.

The gate of the transistor 232 is connected to the control circuit 11, the drain of the transistor 232 is connected to the cathode of the diode 230 and the source of the transistor 232 is connected to the anode of the diode 230.

Each switch may comprise a plurality of transistors 232 and diodes 230 in parallel in series so that the drain of one transistor is connected to the source of another transistor.

When the input switches according to the third embodiment of the said switches are implemented in input modules comprising an HMMC as illustrated in figures 3 to 5 according to the first, second and third examples of the input modules or when the output switches according to the third embodiment of the said are implemented in output modules comprising an HMMC as illustrated in figures 6 to 8 according to the first, second and third examples of the output modules, the diode 230 is designed to support a voltage at least equal to VDC/2.

The inputs modules 40, 41, 42 may comprise one embodiment of the input switches illustrated in figures 11, 12, 13, and the output modules 49, 50, 51 may comprise the same or another embodiment of the output switches illustrated in figures 11, 12, 13.

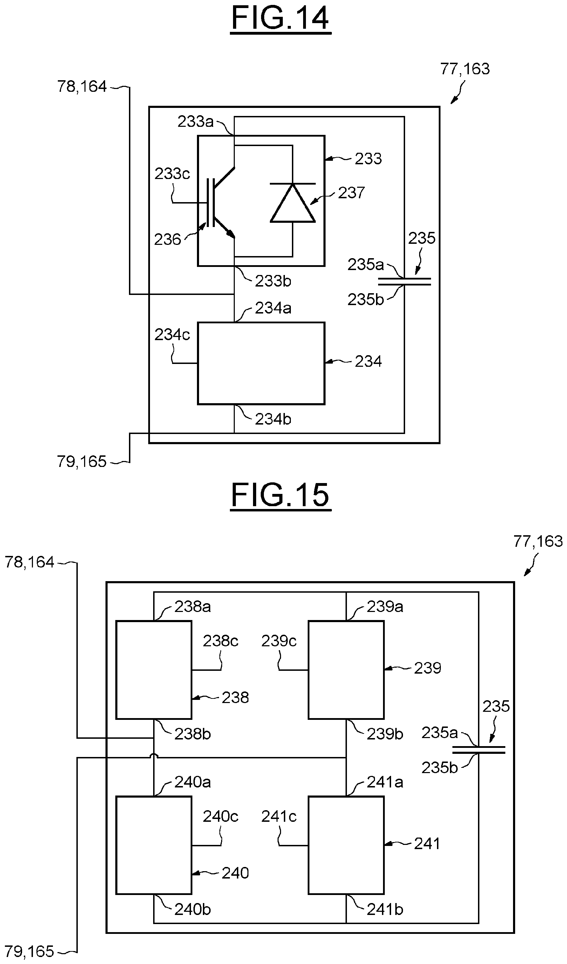

Figure 14 illustrates schematically a first embodiment of the input switching unit 77 and the output switching unit 163.

Each switching unit of the input switching unit 77 and the output switching unit 163 comprises two controllable switches 233, 234 and an energy storage means 235 comprising a first end 235a and a second end 235b.

The energy storage means 235 comprises for example a capacitor.

Each controllable switch 233, 234 comprises a first end 233a, 234a, a second end 233b, 234b, and a control input 233c, 234c connected to the control circuit 11.

The first end 233a of a first controllable switch 233 is connected to the first end 235a of the energy storage means 235.

The second end 233b of the first controllable switch 233 and the first end 234a of the second controllable switch 234 are connected to the first end 78, 164 of the input switching unit 77 or output switching unit 163.

The second end 234b of the second controllable switch 234 is connected to the second end 235b of the energy storage means 235 and to the second end 79, 165 of the input switching unit 77 or output switching unit 163.

As the controllable switches 233, 234 are identical, only the first switch 233 is detailed.

The first switch 233 comprises a transistor 236 and a diode 237. The transistor 236 may be a field effect transistor.

The field effect transistor 236 may be an insulated gate bipolar transistor for example using silicon-base semiconductors such as insulated gate bipolar transistor IGBT or injection-enhanced gate transistor IEGT, or using silicon carbide semiconductors such as metal-oxide-semiconductor field-effect transistor MOSFET.

The gate of the transistor 236 is connected to the control input 233c, the drain of the transistor 236 and the cathode of the diode 237 are connected to the first end 233a, and the source of the transistor 236 and the anode of the diode 237 are connected to the second end 233b.

Figure 15 illustrates schematically a second embodiment of the input switching unit 77 and the output switching unit 163.

Each switching unit of the input switching unit 77 and the output switching unit 163 comprises four controllable switches 238, 239, 240, 241 identical to the controllable switches 233, 234 of the first embodiment illustrated in figure 14.

Each controllable switches 238, 239, 240, 241 comprises a first end 238a, 239a, 240a, 241a, a second end 238b, 239b, 240b, 241b, and a control input 238c, 239c, 240c, 241c connected to the control circuit 11.

Each switching unit 77, 163 further comprises the energy storage means 235

The first end 238a of a first controllable switch 238 and the first end 239a of a second controllable switch 239 are connected to the first end 235a of the energy storage means 235.

The second end 240b of a third controllable switch 240 and the second end 241b of the fourth controllable switch 241 are connected to the second end 235b of the energy storage means 235.

The second end 238b of the first controllable switch 238 and the first end 240a of the third controllable switch 240 are connected to the first end 78, 164 of the input switching unit 77 or output switching unit 163.

The second end 239b of the second controllable switch 239 and the first end 241a of the fourth controllable switch 241 are connected to the second end 79, 165 of the input switching unit 77 or output switching unit 163.

The input switching units 77 and the output switching units 163 according to the first embodiment illustrated in figure 14 have two states, each state delivering a different voltage value on the ends of the input switching units 77 and the output switching units 163.

For example, in a first state, the input and output switching units 77, 163 deliver a positive compensating voltage Vcc, and in a second state a nil voltage.

The input switching units 77 and the output switching units 163 according to the second embodiment illustrated in figure 15 have three states, each state delivering a different voltage value on the ends of the input switching units 77 and the output switching units 163.

For example, in a first state, the input and output switching units 77, 163 deliver a positive voltage Vcc, in a second state a nil voltage, and in a third state a negative compensating voltage -Vcc.

The embodiment of the input switching units 77 of inputs modules 40, 41, 42 and the embodiment of the output switching units 163 of the output modules 49, 50, 51 may be identical or different.

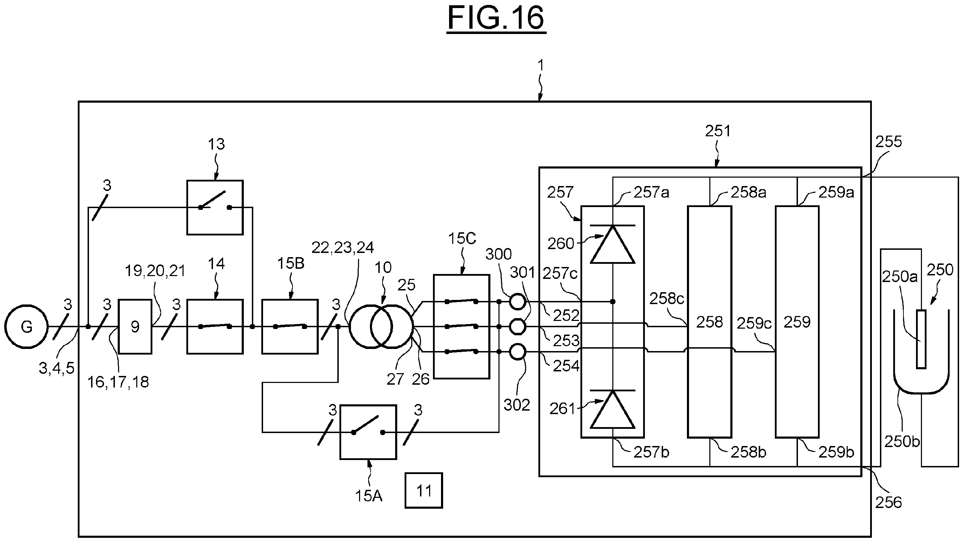

Figure 16 illustrates a second example of the arc furnace facility.

The arc furnace facility differs from the arc furnace facility illustrated in figure 1 in that the arc furnace facility comprises a direct voltage arc furnace 250.

The direct voltage arc furnace 250 comprises the set of electrodes comprising only one electrode 250a.

To supply the direct voltage arc furnace 250, the power supply system 1 further comprises a rectifier 251.

The rectifier 251 comprises a plurality of inputs 252, 253, 254, being connected the phase 25, 26, 27 of the secondary circuit of the transformer 10.

The rectifier 251 further comprises a first output 255 connected to an enclosure 250b of the arc furnace 250 and a second output 256 connected to the electrode 250a of the arc furnace 250.

The rectifier 251 comprises the same number of identical legs 257, 258, 259 as the number of phases of the secondary circuit of the transformer 10, each leg 257, 258, 259 being connected to a different phase.

Each leg 257, 258, 259 comprises a first connection 257a, 258a, 259a, a second connection 257b, 258b, 259b, and a third connection 257c, 258c, 259c.

The first connection 257a, 258a, 259a of each leg 257, 258, 259 is connected to the first output 255 of the rectifier 251, the second connection 257b, 258b, 259b of each leg 257, 258, 259 is connected to the second output 256 of the rectifier 251, and the third connection 257c, 258c, 259c is connected to a different input 252, 253, 254 of the rectifier 251.

As the legs 257, 258, 259 are identical, only a first leg 257 is detailed.

The first leg 257 comprises two identical power diodes 260, 261 connected in series.

The cathode of a first power diode 260 is connected to the first connection 257a, the anode of the first power diode 260 and the cathode of the second power diode 261 are connected to the third connection 257c, and the anode of the second power diode 261 is connected to the second connection 257b.

The rectifier 251 rectifies the voltage delivered by each phase of the secondary circuit to supply the electrode 250a of the direct voltage arc furnace 250.

In a variant, the rectifier 251 may comprise an active rectifier made from controlled semiconductor, for example transistors and/or gate turn off thyristors.

The implementation of a HMMC according to the examples described above in input and output modules permits to reduce the volume, the size and the weight of the said modules, and to increase power density and efficiency of the said modules.

A first example of a method implementing the power supply system 1 is presented.

The control circuit 11 opens the first disconnecting means 13 and the first isolation switch 15A and closes the second disconnecting means 14, the second isolation switch 15B and if applicable the third isolation switch 15C.

As first disconnecting means 13 and first isolation switch 15A are open, no current flows through the first disconnecting means 13, and first isolation switch 15A.

As the second disconnecting means 14 are closed, currents flow from the outputs 19, 20, 21 of the power converter 9 to the primary circuit of the transformer 10.

The control circuit 11 controls the input modules 40, 41, 42 and the outputs modules 49, 50, 51 to supply the set of electrodes and to stabilize the current and the voltage delivered by the grid G to reduce reactions in the grid G generated by the arc furnace 2, 250.

The control circuit 11 controls independently each input switching unit 77 and each output switching unit 163, and if applicable each input switch and each output switch to supply the set of electrodes and to stabilize the current and the voltage delivered by the grid G to reduce reactions in the grid G.

In a second example of the method implementing the power supply system 1, the control circuit 11 closes the first disconnecting means 13, the second isolation switch 15B so that currents flow through the second isolation switch 15B and if applicable the third isolation switch 15C so that currents flow through the third isolation switch 15C, and opens the second disconnecting means 14 and the first isolation switch 15A so that no current flows from the outputs of the power converter 9 to the primary circuit, the primary circuit being supplied directly by the grid G.

The output switching unit 163 are idle and if applicable the output switches are open.

The control circuit 11 controls independently each input switching unit 77 of the input modules to stabilize the current and the voltage delivered by the grid G to reduce reactions in the grid G.

The input modules of the power converter 9 acts as a static compensator STATCOM to reduce the reactions on the grid G.

When the power converter 9 comprises the input modules 40, 41, 42 according to the first example illustrated in figure 3, in this second example of the method, the control circuit 11 further closes the input switch 61 of the first set of input switches between the first end 57 of the first branch 55 and the first connecting node 65 of the first branch 55, and the input switch 64 of the second set of input switches between the second end 60 of the second branch 56 and the second connecting node 66 of the second branch 56, and the control circuit 11 further opens the input switch 62 of the first set of input switches between the first connecting node 65 of the first branch 55 and the third connecting node 67 of the first string 53 and, the input switch 63 of the second set of input switches between the second connecting node 66 of the second branch 56 and the third connecting node 67 of the first string 53.

In a variant, the control circuit 11 further opens the input switch 61 of the first set of input switches between the first end 57 of the first branch 55 and the first connecting node 65 of the first branch 55, and the input switch 64 of the second set of input switches between the second end 60 of the second branch 56 and the second connecting node 66 of the second branch 56, and the control circuit 11 further closes the input switch 62 of the first set of input switches between the first connecting node 65 of the first branch 55 and the third connecting node 67 of the first string 53 and, the input switch 63 of the second set of input switches between the second connecting node 66 of the second branch 56 and the third connecting node 67 of the first string 53.

When the power converter 9 comprises the input modules 40, 41, 42 according to the second example illustrated in figure 4, in this second example of the method, the control circuit 11 further opens the first input switch 89 and the second input switch 93, and further closes the third input switch 104 and the fourth input switch 105.

When the power converter 9 comprises the input modules 40, 41, 42 according to the third example illustrated in figure 5, in this second example of the method, the control circuit 11 further opens the first input switch 118 and the second input switch 122, and further closes the third input switch 104 and the fourth input switch 105.

In a third example of the method implementing the power supply system 1, the control circuit 11 opens the first disconnecting means 13 so that currents flow from the grid G to the inputs 16, 17, 18 of the power converter 9 and so that no current flows directly from the grid G to the second disconnecting means 14, opens the second isolation switch 15B and if applicable the third isolation switch 15C, and closes the second disconnecting means 14 and the first isolation switch 15A, so that electrode(s) of the arc furnace 2, 250 is directly supplied by the power converter 9, the transformer 10 being bypassed to simplify the control of the power converter 9 to supply the arc furnace 2, 250, and to improve the reliability and the efficiency of the power supply system 1.

The first and second isolation switches 15A, 15B permit to bypass and isolate the transformer 10.

The third isolation switch 15C permits to bypass the transformer 10.

## Claims

1. Power supply system (1) for arc furnace (2, 250), the power supply system including:
- a power converter (9) comprising an input (16, 17, 18) intended to be connected to a polyphase supply grid (G) and an output (19, 20, 21), and
- a polyphase transformer (10) comprising a primary circuit and a secondary circuit,
- first disconnecting means (13), and
- second disconnecting means (14),
- **characterized in that** the power supply system comprises a first isolation switch (15A) and a second isolation switch (15B), the first disconnecting means (13) connecting the input of the power converter to a first end of the first isolation switch (15A), the second disconnecting means (14) connecting the output of the power converter to the first end of the first isolation switch (15A), the second end of the first isolation switch (15A) being intended to be connected to at least one electrode (2a, 2b, 2c, 250a) of the arc furnace, the second isolation switch (15B) connecting the first end of the first isolation switch (15A) to the primary circuit and the secondary circuit being connected to the second end of the first isolation switch (15A), and a control circuit (11) configured:
∘ to control the power converter to supply the electrode and to stabilize the current and the voltage delivered by the grid to reduce reactions in the grid when the first disconnecting means are open, the second disconnecting means are closed, the first isolation switch is open and the second isolation switch is closed or the first isolation switch is closed and the second isolation switch is open, and
∘ to control the power converter to stabilize the current and the voltage delivered by the grid to reduce reactions in the grid when the first disconnecting means are closed, the second disconnecting means are open, the first isolation switch is open and the second isolation switch is closed.

2. Power supply system according to claim 1, wherein the power converter (9) comprises an input device (28), a link circuit (29) comprising a first bus (30) and a second bus (31), and an output device (32), wherein:
- the input device (28) comprises a plurality of input modules (40, 41, 42), each input module being connected to the first bus and the second bus and being intended to be connected to a different phase of the supply grid to supply the link circuit with a continuous voltage from the said phase of the supply grid,
- the output device (32) comprises a plurality of output modules (49, 50, 51), each output module being connected to the first bus and second bus and to the primary circuit to supply the transformer with an alternative voltage from the circuit link.

3. Power supply system according claim 2, wherein each input module (40, 41, 42) comprises:
- a leg (52) including:
∘ a first string (53) comprising:
▪ a first set (55) of input switches (61, 62) connected in series, a second set (55) of input switches (63, 64) connected in series, a first connecting node (65), a second connecting node (66), and a third connecting node (67),
▪ the first set of input switches operatively coupling the first bus to the third connecting node, and the first connecting node being disposed between two input switches (61, 62) of the first set of input switches,
▪ the second set of input switches operatively coupling the second bus to the third connecting node, and the second connecting node being disposed between two input switches (63, 64) of the second set of input switches,
∘ a second string (54) comprising:
▪ a first set (68) of input switching units (77) in series, a second set (69) of input switching units (77) in series, and a fourth connecting node (70),
▪ the first set of input switching units operatively coupling the first connecting node (65) to the fourth connecting node (70),
▪ the second set of input switching units operatively coupling the second connecting node (66) to the fourth connecting node (70), and
▪ the fourth connecting node (70) being intended to be connected to the phase of the supply grid,
the control circuit (11) being configured to control the input switches, the input switching units, and the output modules, the third connecting nodes (67) of the input modules being connected together.

4. Power supply system according claim 2, wherein each input module (40, 41, 42) comprises:
- a leg (80) including:
∘ a first string (81) comprising:
▪ a first input switch (89), a second input switch (93), a first connecting node (90), a second connecting node (94), a third connecting node (97), a first set (91) of input switching units (77) connected in series, and a second set (95) of input switching units (77) connected in series,
▪ the first input switch operatively coupling the first bus to the first connecting node, and the first set of input switching units operatively coupling the first connecting node (90) to the third connecting node (97),
▪ the second input switch operatively coupling the second bus to the second connecting node, and the second set of input switching units operatively coupling the second connecting node (94) to the third connecting node (97),
∘ a second string (82) comprising:
▪ a third input switch (104), a fourth input switch (105), and a fourth connecting node (106),
▪ the third input switch operatively coupling the first connecting node (90) to the fourth connecting node (106), and the fourth input switch operatively coupling the second connecting node (94) to the fourth connecting node (106),
▪ the fourth connecting node (106) being intended to be connected to the said phase of the supply grid,
the control circuit (11) being configured to control the input switches, the input switching units, and the output modules, the third connecting nodes (97) of the input modules being connected together.

5. Power supply system according claim 2, wherein each input module (40, 41, 42) comprises:
- a leg (110) including:
∘ a first string (111) comprising:
▪ a first input switch (118), a second input switch (122), a first connecting node (119), a second connecting node (123), a third connecting node (126), a first set (121) of input switching units (77) connected in series, and a second set (125) of input switching units (77) connected in series,
▪ the first set (121) of input switching units (77) operatively coupling the first bus to the first connecting node, and the first input switch operatively coupling the first connecting node (119) to the third connecting node (126),
▪ the second set (125) of input switching units (77) operatively coupling the second bus to the second connecting node, and the second input switch operatively coupling the second connecting node (123) to the third connecting node (126),
∘ a second string (82) comprising:
▪ a third input switch (104), a fourth input switch (105), and a fourth connecting node (106),
▪ the third input switch operatively coupling the first connecting node (119) to the fourth connecting node (106), and the fourth input switch operatively coupling the second connecting node (123) to the fourth connecting node (106),
▪ the fourth connecting node (106) being intended to be connected to the said phase of the supply grid,
the control circuit (11) being configured to control the input switches, the input switching units, and the output modules, the third connecting nodes (126) of the input modules being connected together.

6. Power supply system according to claim 2, wherein each input module (48, 49, 50) comprises a string comprising:
- a connecting node (138) being intended to be connected to the said phase of the supply grid (G), a first set (131) of input switching units (77) connected in series, and a second set (132) of input switching units (77) connected in series,
- the first set (131) of input switching units operatively coupling the first bus to the connecting node (138), and the second set (132) of input switching units operatively coupling the second bus to the connecting node (138), and the control circuit (11) being configured to control the input switching units, and the output modules.

7. Power supply system according to any one of claims 2 to 6, wherein each output module (49, 50, 51) comprises:
- a leg (140) including:
∘ a first string (141) comprising:
▪ a first set (143) of output switches (149, 150) connected in series, a second set (144) of output switches (151, 152) connected in series, a first connecting node (153), a second connecting node (154), and a third connecting node (155),
▪ the first set of output switches operatively coupling the first bus to the third connecting node, and the first connecting node (155) being disposed between two output switches (149, 150) of the first set of output switches,
▪ the second set of output switches operatively coupling the second bus to the third connecting node, and the second connecting node (154) being disposed between two output switches (151, 152) of the second set of output switches,
∘ a second string (142) comprising:
▪ a first set (156) of output switching units (163) in series, a second set (157) of output switching units (163) in series, and a fourth connecting node (158),
▪ the first set of output switching units operatively coupling the first connecting node (153) to the third connecting node (158),
▪ the second set of output switching units operatively coupling the second connecting node (154) to the fourth connecting node (158), and
▪ the fourth connecting node (158) being intended to be connected to a phase (22, 23, 24) of the arc furnace (2, 250),
the control circuit (11) being configured to control the output switches, the output switching units, and the output modules, the third connecting nodes (155) of the output modules being connected together.

8. Power supply system according to any one of claims 2 to 6, wherein each output module (49, 50, 51) comprises:
- a leg (170) including:
∘ a first string (171) comprising:
▪ a first output switch (179), a second output switch (183), a first connecting node (180), a second connecting node (184), a third connecting node (187), a first set (181) of output switching units (163) connected in series, and a second set (185) of output switching units (163) connected in series,
▪ the first output switch operatively coupling the first bus to the first connecting node, and the first set of output switching units operatively coupling the first connecting node (180) to the third connecting node (187),
▪ the second output switch operatively coupling the second bus to the second connecting node, and the second set of output switching units operatively coupling the second connecting node (184) to the third connecting node (187),
∘ a second string (172) comprising:
▪ a third output switch (192), a fourth output switch (193), and a fourth connecting node (194),
▪ the third output switch operatively coupling the first connecting node (180) to the fourth connecting node (194), and the fourth output switch operatively coupling the second connecting node (184) to the fourth connecting node (194),
▪ the fourth connecting node (194) being intended to be connected to a phase (22, 23, 24) of the arc furnace (2, 250),
the control circuit (11) being configured to control the output switches, the output switching units, and the output modules, the third connecting nodes of the output modules being connected together.

9. Power supply system according to any one of claims 2 to 6, wherein each output module (49, 50, 51) comprises:
- a leg (195) including:
∘ a first string (196) comprising:
▪ a first output switch (203), a second output switch (207), a first connecting node (204), a second connecting node (208), a third connecting node (211), a first set (206) of output switching units (163) connected in series, and a second set (210) of output switching units (163) connected in series,
▪ the first set (206) of output switching units (163) operatively coupling the first bus to the first connecting node, and the first output switch operatively coupling the first connecting node (204) to the third connecting node (211),
▪ the second set (210) of output switching units (163) operatively coupling the second bus to the second connecting node, and the second output switch operatively coupling the second connecting node (208) to the third connecting node (211),
∘ a second string (172) comprising:
▪ a third output switch (192), a fourth output switch (193), and a fourth connecting node (194),
▪ the third output switch operatively coupling the first connecting node (204) to the fourth connecting node (194), and the fourth output switch operatively coupling the second connecting node (208) to the fourth connecting node (194),
▪ the fourth connecting node (194) being intended to be connected to a phase (22, 23, 24) of the arc furnace (2, 250),
the control circuit (11) being configured to control the output switches, the output switching units, and the output modules, the third connecting nodes (211) of the output modules being connected together.

10. Power supply system according to any one of claims 2 to 6, wherein each output module (49, 50, 51) comprises a string comprising:
- a connecting node (228) being intended to be connected to a phase (22, 23, 24) of the arc furnace (2, 250), a first set (221) of output switching units (163) connected in series, and a second set (222) of output switching units (163) connected in series,
- the first set (221) of output switching units operatively coupling the first bus to the connecting node (228), and the second set (222) of output switching units operatively coupling the second bus to the connecting node (228), the control circuit (11) being configured to control the output switching units and the output modules.

11. Power supply system according to any one of claims 1 to 10, further comprising a third isolation switch (15C), the third isolation switch (15C) connecting the secondary circuit to the second end of the first isolation switch (15A), the control circuit (11) being configured:
∘ to control the power converter to supply the electrode and to stabilize the current and the voltage delivered by the grid to reduce reactions in the grid when the first disconnecting means are open, the second disconnecting means are closed, the first isolation switch is open and the second and third isolation switches are closed or the first isolation switch is closed and the second and third isolation switches are open, and
∘ to control the power converter to stabilize the current and the voltage delivered by the grid to reduce reactions in the grid when the first disconnecting means are closed, the second disconnecting means are open, the first isolation switch is open and the second and third isolation switches are closed.

12. Arc furnace facility comprising an arc furnace (1, 250) including at least one electrode (2a, 2b, 2c, 250a) and a power supply system (1) according to any one of claims 1 to 10, wherein the electrode is connected to at least one phase of the secondary circuit of the polyphase transformer (10).

13. Arc furnace facility according to claim 11, wherein the arc furnace (2) comprises a plurality of electrodes (2a, 2b, 2c), each electrode being connected to a different phase of the secondary circuit.

14. Arc furnace facility according to claim 11, wherein the power supply system (1) further comprises a rectifier (251) connected to the electrode (250a) and to each phase of the secondary circuit to supply the electrode with a continuous voltage from the secondary circuit.

15. Method for controlling a power supply system (1) of an arc furnace (2, 250), the power supply system including:
- a power converter (9) comprising an input connected to a polyphase supply grid (G) and an output, and
- a polyphase transformer (10) comprising a primary circuit and a secondary circuit,
- first disconnecting means (13), and
- second disconnecting means (14),
- **characterized in that** the method comprises:
∘ controlling the power converter to supply the electrode and to stabilize the current and the voltage delivered by the grid to reduce reactions in the grid when the first disconnecting means are open, the second disconnecting means are closed, a first isolation switch (15A) is open and a second isolation switch (15B) is closed or the first isolation switch is closed and the second isolation switch is open, and
∘ controlling the power converter to stabilize the current and the voltage delivered by the grid to reduce reactions in the grid when the first disconnecting means are closed, the second disconnecting means are open, the first isolation switch is open and the second isolation switch is closed,
- the first disconnecting means (13) connecting the input of the power converter to a first end of the first isolation switch (15A), the second disconnecting means (14) connecting the output of the power converter to the first end of the first isolation switch (15A), the second end of the first isolation switch (15A) being intended to be connected to at least one electrode (2a, 2b, 2c, 250a) of the arc furnace, the second isolation switch (15B) connecting the first end of the first isolation switch (15A) to the primary circuit and the secondary circuit being connected to the second end of the first isolation switch (15A).
